(19) Europäisches Patentamt
European Patent Office
Office européen des brevets

(11) Publication number: **0 486 445 A2**

(12) **EUROPEAN PATENT APPLICATION**

(21) Application number: **91830497.3**

(51) Int. Cl.5: **C08B 37/16**

(22) Date of filing: **13.11.91**

(30) Priority: **13.11.90 IT 1771290**

(43) Date of publication of application:
**20.05.92 Bulletin 92/21**

(84) Designated Contracting States:
**AT BE CH DE DK ES FR GB GR IT LI LU NL SE**

(71) Applicant: **Chiellini, Emo**
**Via Renato Fucini 16**
**I-56100 Pisa(IT)**
Applicant: **Solaro, Roberto**
**Via Morandi 2**
**I-56100 Pisa(IT)**
Applicant: **Bemporad, Luca**
**Via Pungilupo 8**
**I-56100 Pisa(IT)**
Applicant: **D'antone, Salvatore**
**Via Foscole 41, Ghizzano (S. Giuliano Terme)**
**I-56100 Pisa(IT)**

(72) Inventor: **Chiellini, Emo**
**Via Renato Fucini 16**
**I-56100 Pisa(IT)**
Inventor: **Solaro, Roberto**
**Via Morandi 2**
**I-56100 Pisa(IT)**
Inventor: **Bemporad, Luca**
**Via Pungilupo 8**
**I-56100 Pisa(IT)**
Inventor: **D'antone, Salvatore**
**Via Foscole 41, Ghizzano (S. Giuliano Terme)**
**I-56100 Pisa(IT)**

(74) Representative: **de Simone, Domenico et al**
**Ing. Barzanò & Zanardo Roma S.p.A. Via Piemonte 26**
**I-00187 Roma(IT)**

(54) **Polyfunctional derivatives of cyclodextrin.**

(57) New functional derivatives of α, β and γ cyclodextrins obtained by grafting cyclodextrin with epoxides of protected polyols and epoxides containing water soluble substituents such as 2-pyrrolidonyl groups. The reaction products have a degree of substitution per glucose residue between 0 and 1. Selective removal of protecting groups from cyclodextrin substituents, carried out under conditions that do not affect the integrity of cyclodextrin ring, gives rise to hydrosoluble cyclodextrine derivatives whose hydropilic/hydrophobic balance can be modulated by controlling the extent of deprotection. Said compounds can be used for the preparation of adducts with biologically active synyhetic and natural hydrophobic molecules, to be utilized for the preparation of drugs, vaccines, phytodrugs.

EP 0 486 445 A2

The present invention deals with the synthesis of new polyfunctional derivatives of cyclodextrins (CD) obtained by grafting glycidyl ethers of protected polyols followed by deprotection reaction. The selected experimental conditions of the deprotection reactions do not affect the integrity of the cyclodextrin ring and allow to obtain a series of derivatives having a different degree of deprotection and hence a modulated hydrophobic/hydrophilic balance.

BACKGROUND ART

Cyclodextrins arc cyclic oligomers of glucose, preferably constituted by either six ($\alpha$-cyclodextrin), or seven ($\beta$-cyclodextrin), or eight ($\gamma$-cyclodextrin) glucose residues linked by $\alpha(1\rightarrow4)$ glycosyl bonds.

Topologically, CD can be schematically represented by a toroid, where primary and secondary hydroxyl groups are placed on the smaller and the larger circumference, respectively. No hydroxyl groups are present within the toroid and therefore its cavity is highly hydrophobic.

Some of the structural and physico-chemical properties of cyclodextrins are summarized in the following Table 1.

Table 1

| Characterization of cyclodextrins a) | | | | | | |
|---|---|---|---|---|---|---|
| Type | glucose. residues | MW | Solubility[b)] | $[\alpha]_D^{25}$ c) | Diameter [Å] | |
| | | | | | Cavity[d)] | External |
| $\alpha$ | 6 | 972 | 14,5 | 150,5±0,5 | 4,7-5,2 | 14,6±0,4 |
| $\beta$ | 7 | 1135 | 1,9 | 162,5±0,5 | 6,0-6,4 | 15,4±0,4 |
| $\gamma$ | 8 | 1297 | 23,2 | 177,4±0,5 | 7,5-8,3 | 17,5±0,4 |

a) height of cyclodextrin toroid = 7,9-8 Å;
b) in water (g/100 ml) at room temperature;
c) in water;
d) the lowest and the highest values are referred to hydrogen atoms bound to C-5 and C-3, respectively.

When hydrated, the internal cavity of $\alpha$-,$\beta$ -and $\gamma$-cyclodextrins contains 6, 11 and 17 water molecules, respectively (J. Pitha J. Milecki, H. Fales, L. Pannell, K. Uekama, Int. J. Pharm. 29, 73, 1986). A significant energy gain is attained when these molecules are substituted by apolar molecules or residues of apolar molecules having suitable dimension.

Cyclodextrins were first isolated in 1891 by A. Villiers (C.R. Acad. Sci. 112, 536, 1891) while their structure was assessed in 1904 by F. Schardinger (F. Schardinger, Wien Klin. Wochenschr. 17, 207, 1904). They are formed during the enzymatic degradation of starch by a bacterial amylase named cyclodextrin glucosyl transferase. This enzyme converts starch, a linear polysaccharide constituted by glucose units linked by $\alpha(1\rightarrow4)$ bonds and having a helical conformation containing six units per turn, in a mixture of linear and cyclic dextrins (glucose oligomers). The formation of crystalline inclusion complexes with different organic compounds (usually tetrachloroethane) allows for the isolation of cyclodextrins from starch lysate. Then the different dimensional selectivity of $\alpha$,$\beta$ and $\gamma$ -cyclodextrin in the formation of complexes with aromatic hydrocarbons is usually exploited for their separation. The yield of one of the cyclodextrins can be selectively increased by carrying out the enzymatic digestion of starch in the presence of suitable selective complexing agents.

Toxicological investigations indicate that cyclodextrin accumulates in the body similarly to starch (G.H. Andersen, F.J. Robbins, F.J. Domingues, R.G. Moores, C.L. Long. Toxicol. Appl. Pharmacol.5,257, 1963), even if their degradation rate is lower. Oral administration of cyclodextrins is harmless, whereas parenterally a 0,5%, dose, referred to the body weight, is letal (A. Mifune, J. Synth. Org. Chem. Jap. 32, 889, 1974; T. Makita, N. Koshima, Y. Ashimoto, H. Ide, M. Tsuji, Y. Hujisaki, Pharmacometrics 10, 499, 1975; J. Szejtli, G. Sebestyen, Staerke 31, 385, 1979). Very likely the tendency of cyclodextrins to crystallize is responsible for the observed toxicity.

The most interesting property of cyclodextrins is their ability to form complexes with a large variety of apolar and hydrophobic molecules, by inclusion within their cavity. Their use as complexing agents have been exploited to improve properties, stability and taste of pharmaceutical products ("Cyclodextrin and congeners as drug carriers", Macrochem Co., Internal Report, 1989; W. Saenger, Angew. Chem. Int. Ed. Engl. 19, 344, 1980). The advantages obtained by this route are:

- liquid compounds are transformed in crystalline ones, that can be more easily utilized,
- the loss of volatile compounds by evaporation is reduced,
- the inclusion within the cyclodextrin cavity protects air-sensitive compounds from oxidation,
- bad taste and unpleasant smell are masked,
- incompatible compounds can be mixed if one of the components is protected by formation of an inclusion complex,
- compounds sparingly soluble in water can be dissolved in water and their dissolution rate can be increased,
- optimal therapeutic levels of drugs are obtained in controlled release formulations, due to the drug microdispersion,
- cyclodextrins are methabolyzed without giving rise to toxic residues.

On the other hand, the stoichiometry of drug/cyclodextrin complexes, usually 1:1, 2:1 or 1:2, can be a noticeable limitation. In fact, the rather high molecular weight of cyclodextrins limits the amount of drug that can be administred by normal tablets. One further limitation is constituted by the stability of the cyclodextrin/drug complex. The association constant of the inclusion complex must be large enough to guarantee that only a small percentage of the drug is in the free form and therefore can either be hydrolyzed or give rise to side effects. Many inclusion complexes have association constants included between $10^2$ $M^{-1}$ and $10^4$ $M^{-1}$: only complexes having association constants close to the upper limit can be utilized in most applications.

Chemical modification of one or more hydroxyl groups of the cyclodextrin rings appears to be the most suited strategy to fulfill this condition (US Pat. No. 3.420.788; US Pat. No. 3.453.259; US Pat. No. 3.459.731; GB Pat. No. 1.244.990; JP Pat. No. 82.130.914: Szejtli, in "Cyclodextrins and their inclusion complexes", Akademiai Kiaddo, Budapest, 1982; US Pat. No. 4.596.795; US Pat. No. 4.727.064; US Pat. No. 4.877.774).

Potentially, β-cyclodextrin (β-CD) is the most appealing as a complexing agent, due to both its lower cost and the dimensions of the internal cavity. However the compound is characterized by a lower water solubility as compared to the other cyclodextrins. Controlled methylation of β-cyclodextrin produces eptakis-(2,6-O-dimethyl)- β-cyclodextrin (DM-β CD), that is not only much more water soluble than the starting compound, but also exhibits a fourfold increase of the association constant with several therapeutic agents (A. Yoshida. H. Arima. K. Uekama, J. Pitha. Int. J. Pharm. 46, 217, 1988). The chemical structure of the reaction product seems however to be much more complex than the proposed one, both in terms of degree of substitution and of molecular dishomogeneity (T. Irie, K. Fukunaga, J. Pitha, K. Uekama, H.M. Fales, E.A. Sokolowski, Carbohydr. Res. 192, 167, 1989). Also derivatives obtained by reaction of cyclodextrins with epoxides, mainly ethylene and propylene oxides, have been largely investigated (J. Pitha, J. Pharm. Sci. 74, 987 (1985); J. Pitha. C.T.Rao, B. Lindberg. P. Seffers, Carbohydr. Res. 200, 429 (1990)). As compared to the starting cyclodextrin, 2-hydroxypropyl- β-cyclodextrin (HP- βCD) and hydroxyethyl-β-cyclodextrin (HE-βCD), having degree of substitution lower than 7, are characterized by a much larger water solubility and a lower toxicity, allowing for higher dosages without side effects (A. Yoshida, H. Arima, K. Uekama, J. Pitha, Int. J. Pharm. 46, 217, 1988). Association constants of the complexes of these derivatives with several drugs are comparable to those observed for the unsubstituted cyclodextrin. As far as their biomedical application is concerned, they have been used in the administration of sexual hormones in rats and in humans (A. Yoshida, H. Arima, K. Uekama, J. Pitha, Int. J. Pharm. 46, 217, 1988; J. Pitha, S.M. Harman, M.E. Michel, J. Pharm. Sci. 75, 987, 1985; T. Taylor, J. Weiss, J. Pitha, Pharm. Res. 6. 641, 1989; J. Pitha, J. Bioact. Compat. Polym. 3, 157, 1988). By intravenous administration it is also possible to administer modified exogen and endogen lipophilic substances that natural carriers do not recognize, thus allowing for their redistribution and methabolism (J. Pitha, J. Bioact. Compat. Polym. 3, 157 (1988)). However, hydroxyalkyl-β-cyckidextrin are less attractive than DM- βCD for the preparation of retarded and controlled release systems, because of their rather low association constants.

Reaction of β-cyclodextrin with epichlorohydrin produces a crosslinked polymer having the same complex forming ability of β CD coupled to a much larger hydrosolubility, that can be used to break down clusters of organic molecules in water and for applications in the controlled release of active principles (N. Kobayashi, H. Shirai, N. Hojo, J. Polym. Sci. Part C, Polym. Letters 27, 191, 1989).

A different approach to the synthesis of cyclodextrin derivatives is based on a more controlled modification of the precursors, thus giving rise to structurally well defined products. By using suitable reaction conditions and purification procedures, it is possible to obtain cyclodextrin derivatives having only one (or more) specific hydroxyl linked to a good leaving group, such as 2-, 3- and 6-monotosyl-$\beta$-cyclodextrin. These derivatives are suitable precursors of a variety of products that can be divided into three main groups: substituted cyclodextrins, crosslinked cyclodextrins, and covalently bound cyclodextrin/drug systems. A large variety of substituents can be linked to the cyclodextrin by amine, thioether, amide, and ester bonds and derivatives of the first group can be tailored to have a specific complexing ability. By linking together two cyclodextrin molecules or cyclodextrin derivatives it is possible to form complexes with large drug molecules. Also oligomers and polymers of cyclodextrin can be prepared by this route. Finally, covalently binding of drugs to cyclodextrins affords pro-drugs that can release the active principles by processes governed by hydrolysis.

There are several more fields for cyclodextrins and their derivatives applications. Their complexing ability can be exploited for treatments with herbicides and biocides in agriculture as well as for the preparation of cosmetic products. In chemistry and in biochemistry, cyclodextrins have been utilized for the preparation of chiral stationary phases to be used in gas-liquid and liquid chromatography for the optical resolution of racemates, both from preparative and analytical stand-points. Their catalytic properties have been highlighted in several chemical and biochemical reactions, allowing also for their use as enzymatic models (W. Saenger, Angew. Chem. Int. Ed. Engl. 19, 344, 1980).

## DISCLOSURE OF THE INVENTION

The present invention discloses cyclodextrin derivatives grafted with protected polyhydroxylated substituents, with a more marked hydrophilic character, chemically tuneable by partial removal of the hydrophobic isopropylidene protecting groups present in the glycidyl residues grafted on the glucose units, having the following formula:

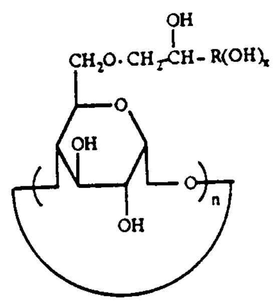

where

R is comprised in the following group:

- either 1-(2-pyrrolidonyl)alkoxymethyl or 1-(2-pyrrolidonyl)alkyl and then x = 0;
- glyceryl and then x = 2;
- pentitolyl and then x = 4;
- heptitolyl and then x = 6;

n = either 6, or 7, or 8.

The presence of 2, 4 and 6 neighbouring hydroxyl groups in the side chains bound to the cyclodextrin ring, also taking into account their configurational and conformational properties, is favourable to specific and selective interactions with chiral compounds. Chelation of ions of heavy metals is also possible.

According to the invention a process is described by grafting on the cyclodextrin of glycidyl ethers of isopropylideneglycerol and of higher homolog alditols having an odd number of hydroxyl groups, preferably 5 and 7 (pentitols and heptitols), selectively protected with a number of isopropylidene groups such as to leave only one hydroxyl group free for the glycidylation reaction. An analogous control of the hydrophilic/hydrophobic balance has been obtained by using N-glycidyl-2-pyrrolidone as grafting agent.

Glycidylation of protected alditols is performed by reaction with epichlorohydrin under alkaline conditions, either in the presence or in the absence of tetrabutylammonium bromide as catalyst. Glycidyl ethers were isolated from the reaction products with yields variable between 69 and 98%.

Grafting of cyclodextrins is carried out at room temperature under alkaline conditions, preferably at 60C, by using 1-2 moles of glycidyl ether per glucose residue. The reaction products are in all cases soluble in chloroform and are characterized by a degree of sobstitution of 0,7-1,0 glycidyl residues per glucose unit.

Removal of side-chain isopropylidene groups can be carried out in methanol and in water/methanol mixtures, either in the presence of mineral acids (HCl, H2SO4) or preferably in the presence of an ion-exchange sulfonic resin in the acid form, that can be separated from the cyclodextrin solution simply by filtration. Depending on the structure of the starting material, complete removal of the protecting groups is reached in 24-100 hours, at 45C. By suitably changing reaction time and temperature, it is possible to stop the reaction at degree of deprotection variable between 0 and 100%.

Under the adopted conditions, no parasite degradation of the glucose rings of cyclodextrin is observed.

The prepared derivatives, both partially protected or totally deprotected, are amorphous in nature and their solubility in water increases with increasing the degree of deprotection to reach values up to 200 g/100 ml water.

Hydrophobic drugs and active principles such as steroids vitamins, cholesterol and retinol are uptaken by the modified $\beta$-cyclodextrins. The solubilities of the metioned active principles in a 50% (w/w) water solution of modified cyclodextrins depend upon their structure, degree and type of cyclodextrin modification and ranges between 1 and 250 mg/ml.

## DETAILED DESCRIPTION OF THE INVENTION

The reported examples refer to $\beta$-cyclodextrin derivatives, but the same considerations on grafting and deprotection reactions apply also to $\alpha$-e $\gamma$-cyclodextrin.

### Preparation of Glycidic Monomers

#### Example 1 1-O-Glycidyl-2,3-O-isopropylideneglycerol GIG

A suspension of 11.0 g (0,46 mol) of NaH in 600 ml of anhydrous THF was placed under dry nitrogen in a 3-necked 1000 ml flask, equipped with condenser, dropping funnel and mechanical stirrer. Then 50 ml (0.38 mol) of (R),(S)-isopropylideneglycerol (Solketal) were added over 1.5 h under stirring and then refluxed for 3 h. 400 ml (25 mol) of the resulting suspension was added under dry nitrogen over 3 h to 70 ml (0.90 mol) of epichlorohydrin (EPY) in a 3-necked 1000 ml flask, equipped with condenser, dropping funnel and mechanical stirrer. The mixture was stirred overnight at room temperature and then refluxed for 6 h. After cooling, the solid was filtered off. The resulting solution, after removal of the volatile products, was distilled under vacuum over calcium hydride to yield 33.6 g (71%) of a colourless liquid having b.p. 76C/0.2 mm that was characterized by IR and NMR spectroscopy.

IR (liquid film): $\bar{\nu}$ = 3040 ($\nu$ CH epoxide ), 3000-2800 ($\nu$ CHaliphatic), 1456 ($\delta$ $CH_2$ e $\delta_{as}$ $CH_3$), 1380 ($\delta$ $CH_3$), 1250-1040 ($\nu$ C-O-C), 904 ($\nu$ C-O-C epoxide) e 844 $cm^{-1}$ ($\nu$ epoxid and diossolanic ring ).

$^1$H-NMR ($CDCl_3$): $\delta$ = 1,3 e 1,4 (due s, 6H, $CH_3$), 2,6 (m, 1H, CH-9a), 2,8 (d.d., 1H, CH-9b), 3,2 (m, 1H, CH-8), 3,4-3,9 (m, 5H, $CH_2$ e CH-3a), 4,1 (d.d., 1H, CH-3b) e 4,3 ppm (m, 1H, CH-2).

$^{13}$C-NMR ($CDCl_3$): $\delta$ = 24,87 (C-5), 26,23 (C-6), 43,53 (C-9), 50,23 (C-8), 66,21 (C-7), 71,82, 71,94 e 72,06 (C-1 + C-3), 74,29 e 74,37 (C-2) e 109,11 ppm (C-4).

#### Example 2 1-0-Glycidyl-2,3-0-isopropylideneglycerol GIG

A solution of 30.0 g (227 mmol) of solketal and 7.4 g (2.3 mmol) of tetrabutylammonium bromide (TBAB) in 90 ml of toluene was added to 100 ml of 50% NaOH water solution in a 3-necked 500 ml flask, equipped with condenser, dropping funnel and mechanical stirrer. The mixture was stirred at room temperature for 1 h, then 35 ml (0.448 mol) of EPY were added under stirring. The resulting suspension was stirred for additional 26 h, then the organic layer was dried over MgSO4. After removal of the volatile products, the residue was distilled under vacuum over calcium hydride to yield 34.3 g (80%) of colourless liquid having b.p. 76C/0.2 mm that was characterized by IR and NMR spectroscopy.

Example 3 0-Glycidyl-di-0-isopropylidenexylitol XPG

a) $D_1$-O-isopropylidenexylitol (XP)

A suspension of 110 g of ZnCl2 in 1.0 l of acetone was stirred for 3 h at room temperature and then left standing overnight. The surnatant was transferred under dry nitrogen into a 2000 ml two-necked flask equipped with mechanical stirrer, then 80.0 g (0.53 mol) of xylitol were added and the reaction mixture was kept under stirring for 17 h. The resulting solution was poured into a 2000 ml flask and 2.01 of 20% NaOH water solution were slowly added. The organic layer was evaporated under vaccum, the residue was dissolved in diethyl ether and filtered. After removal of the volatile products, the oily residue was distilled under vacuum to yield 95.1 g (78%) of a viscous liquid having b.p. 108-113C/0.2 mm and constituted by a 12:1:8 mixture of three products, as shown by g.l.c. analysis. The mixture was characterized also by IR and NMR spectroscopy.
IR (liquid film): $\bar{\nu}$ = 3482 ($\nu$ OH), 3000-2800 ($\nu$ CHaliphatic ), 1458 ($\delta$ $CH_2$ e $\delta_{as}$ $CH_3$), 1376 ($\delta_s$ $CH_3$), 1250-1040 ($\nu$ C-O-C e $\nu$ C-O alcoholic) e 848 $cm^{-1}$ ($\nu$ diossolanic ring).
$^{13}$C-NMR ($CDCl_3$): $\delta$ = 25-27 ($CH_3$), 62-78 (CH-O + $CH_2$-O) e 109-110 ppm (O-C-O).

b) O-Glycidyl-di-O-isopropylidenexylitol

A solution of 77.0 g (0.332 mol) of di-0-isopropylidenexylitol and 10.6 g (33 mmol) of 15 tetrabutylammonium bromide in 200 ml of toluene was added to 250 ml of a 50% NaOH water solution in a 1 l three-necked flask equipped with condenser, dropping funnel and mechanical stirrer. The mixture was stirred at room temperature for 1 h, then 55 ml (0.70 mol) of 20 EPY were added under stirring. The resulting suspension was stirred for additional 28 h, then the organic layer was dried over Na2SO4. After removal of the volatile products, the residue was distilled under vacuum over calcium hydride to yield 83.7 g (87%) of colourless 25 liquid having b.p. 150-153C/0.5 mm and constituted by a 2:1 mixture of two isomers, as shown by g.l.c. analysis. The mixture was characterized also by IR and NMR spectroscopy.
IR (liquid film): $\bar{\nu}$ = 3052 ($\nu$ CH epoxide ), 3000-2800 ($\nu$ CH aliphatic), 1456 ($\delta$ $CH_2$ e $\delta_{as}$ $CH_3$), 1380 ($\delta_s$ $CH_3$), 1250-1040 ($\nu$ C-O-C ), 904 ($\nu$ C-O-C epoxide ) e 844 $cm^{-1}$ ($\nu$ epoxid and diossolanic ring ).
$^1$H-NMR ($CDCl_3$): $\delta$ = 1,2-1,4 (m, 12H, $CH_3$), 2,5 e 2,7 (due m, 2H, $CH_2$ epoxide ), 3,1 (m, 1H, CH epoxide ) e 3,3-4,2 ppm (m, 7H, $CH_2$ e CH).
$^{13}$C-NMR ($CDCl_3$): $\delta$ = 25-27 ($CH_3$), 43,5-44,5 (CH epoxide ), 50-51 ($CH_2$ epoxide), 65-81 (CH-O + $CH_2$-O) e 109-110 ppm (O-C-O).

Example 4 L-O-Glycidyl-di-O-isopropylidenearabitol APG

a) L-di-O-isopropylidenearabitol (AP)

A suspension of 50 g of ZnCl2 in 400 ml of acetone was stirred for 3 h at room temperature and then left Standing overnight. The surnatant was transferred uner dry nitrogen into a 2000 ml two-necked flask equipped with mechanical stirrer, then 25.0 g (0.164 mol) of L-arabitol were added and the reaction mixture was kept under stirring for 17 h. The resulting solution was poured into a 2000 ml flask and 800 ml of a 20% NaOH water solution were slowly added. The organic layer was evaporated under vacuum, the residue was dissolved in diethyl ether and filtered. After removal of the volatile products, the oily residue was distilled under vacuum to yield 23.6 g (69%) of a viscous liquid having b.p. 92-94C/0.1 mm and constituted by a 20:10:1 mixture of three isomers, as shown by g.l.c. analysis. The mixture was characterized also by IR and NMR spectroscopy.
IR (liquid film): $\bar{\nu}$ = 3482 ($\nu$ OH), 3000-2800 ($\nu$ CHaliphatic ), 1458 ($\delta$ $CH_2$ e $\delta_{as}$ $CH_3$), 1376 ($\delta_s$ $CH_3$), 1250-1040 ($\nu$ C-O-C ether e $\nu$ C-O alcoholic) e 848 $cm^{-1}$ ($\nu$ diossolanic ring ).
$^{13}$C-NMR ($CDCl_3$): $\delta$ = 25-27 ($CH_3$), 62-81 (CH-O + $CH_2$-O) e 109-110 ppm (O-C-O).

b) L-O-Glycidyl-di-O-isopropylidenearabitol

A solution of 23.0 g (99 mmol) of L-di-O-isopropylidenearabitol and 3.2 g (9.9 mmol) of tetrabutylammonium bromide in 60 ml of toluene was added to 110 ml of a 50% NaOH water solution in a 500 ml theenecked flask equipped with condenser, dropping funnel and mechanical stirrer. The mixture was stirred at room temperature for 1 h, then 18.5 ml (0.20 mol) of EPY were added under stirring. The resulting suspension 5 was stirred for additional 42 h, then the organic layer was dried over Na2SO4. After removal

of the volatile products, the residue was distilled under vacuum over calcium hydride to yield 23.0 g (81%) of colourless liquid having b.p. 110-115C/0.1 mm that gave only one broad peak at the g.l.c. analysis. The mixture was characterized by IR and NMR spectroscopy.

IR (liquid film): $\bar{\nu}$ = 3052 ($\nu$ CH epoxide ), 3000-2800 ($\nu$ CHaliphatic), 1458 ($\delta$ $CH_2$ e $\delta_{as}$ $CH_3$), 1376 ($\delta_s$ $CH_3$), 1250-1040 ($\nu$ C-O-C), 910 ($\nu$ C-O-C epoxide) e 848 $cm^{-1}$ ($\nu$ epoxid and diossolanic ring ).

$^1$H-NMR ($CDCl_3$): $\delta$ = 1,2-1,4 (m, 12H, $CH_3$), 2,5 e 2,7 (due m, 2H, $CH_2$ epoxide ), 3,1 (m, 1H, CH epoxide) e 3,3-4,1 ppm (m, 7H, $CH_2$ e CH).

$^{13}$C-NMR ($CDCl_3$): $\delta$ = 25-27 ($CH_3$), 43,5-44,5 (CH epoxide ),50-51 ($CH_2$ epoxide), 65-82 (CH-O + $CH_2$-O) e 108,5-110 ppm (O-C-O).

Example 5 N-Glycidylpyrrolidone NGP

a) 2-Pyrrolidone potassium salt (K-PY)

A suspension of 21.1 g (0.54 mol) of potassium in 150 ml of anhydrous benzene was placed under dry nitrogen atmosphere in a 500 ml three-necked flask equipped with condenser, dropping funnel and mechanical stirrer, then a solution of 50.6 g (0.58 mol) of 2-pyrrolidone in 110 ml of anhydrous benzene was slowly added under vigorous stirring. The mixture was kept under stirring at room temperature for 3 days and at 40C one day. The solid product was then filtered, repeatedly washed with anhydrous benzene, and dried under vaccum to yield 65.0 g (98%) of a white hygroscopic powder.

b) N-Glycidylpyrrolidone

A suspension of 65.0 g (.53 mol) of the potassium salt of pyrrolidone in 300 ml of anhydrous THF was slowly added under stirring to 124.0 g (1.35 mol) of epychlorohydrine placed in a 500 ml three-necked flask equipped with condenser and dropping funnel, under dry nitrogen atmosphere. The reaction mixture was heated at reflux for 6 h and then left overnight at room temperature. The solid residue was filtered off, washed with THF and the organic fractions, after removal of the volatile products, were distilled under vacuum to yield 38.5 g (52%) of a colourless liquid having b.p. 97-100C/0.3 mm. The product was stirred for 3 days at room temperature over CaH2. then distilled again (p.b. 95-96C/0.2 mm) and analyzed by IR and NMR spectroscopy.

IR (liquid film): $\bar{\nu}$ = 3050 ($\nu$ CH epoxide ), 3000-2850 ($\nu$ CHaliphatic ), 1680 ($\nu$ C=O), 1500-1400($\delta$ $CH_2$ + $\nu$ lactamic ring ), 1280 ($\nu$ C-O-C + $\nu$ lactamic ring ), 850 $cm^{-1}$ (epoxid ring ).

$^1$H-NMR ($CDCl_3$): $\delta$ = 2,0 (m, 2H, $CH_2$-5), 2,4 (t, 2H, $CH_2$-6), 2,5 (due d, 1H, CH-1b), 2,7 (m, 1H, CH-1a), 3,1 (m, 2H, CH-2c + CH-3e), 3,5 (m, 2H, $CH_2$-4)e 3,8 ppm (due d, 1H, CH-3d).

$^{13}$C-NMR ($CDCl_3$): $\delta$ = 18,1 (C-5), 30,7 (C-6), 44,7 (C-1), 44,8 (C-4), 48,4 (C-3), 50,2 (C-2) e 175,6 ppm (C-7).

Grafting of Glycidic Ethers on $\beta$-cyclodextrin

Example 6 Reaction of 1-0-glycidyl-2.3-0-isopropyli deneglycerol with $\beta$-Cyclodextrin

A solution of 3.2 g (2.8 mmolof glucosidic residues) of $\beta$-CD in 8 ml of 12% weight aqueous NaOH was placed under dry nitrogen atmosphere in a 25 ml glass vial. 5.3 g (28.2 mol) of GIG were added drop by drop by continuous mixing and the solution maintained at r.t. for 1 hr, at 60C for 1,5 hrs and at r.t. for additional 15 hrs. The pH was adjusted to 7-8 by adding diluted HCl and the half-solid residue washed with ethilic ether. The white solid residue was dissolved with chloroform and then dried under vacuum to yield 5.8 g of polymeric product that was characterized by IR and NMR analysis.

IR (film): $\bar{\nu}$ = 3600-3100 ($\nu$ O-H), 3000-2800 ($\nu$ CH aliphatic ), 1464 ($\delta$ $CH_2$ e $\delta_{as}$ $CH_3$), 1378 ($\delta_s$ $CH_3$), 1300-1000 $cm^{-1}$ ($\nu$ C-O-C e $\nu$ C-O)e 800-400 $cm^{-1}$ ($\delta$ O-H).

$^1$H-NMR (DMSO-$d_6$): $\delta$= 1,2 e 1,3 (due s, $CH_3$), 3,0-5,2 (m, CH-O + $CH_2$-O + OH) e 5,7 ppm (s, O-CH-O).

$^{13}$C-NMR (DMSO-$d_6$): $\delta$ = 25,40 e 26,78 ($CH_3$), 59-83 (CH-O + $CH_2$-O), 99-103 (O-C-O $\beta$CD) e 108 66 ppm (O-C-O GIG).

Example 7 Reaction of 0-glycidyl-di-0-isopropyli denexylitol with $\beta$-cyclodextrin

A solution of 3.2 g (19.8 mmol) of glucosidic residues) of $\beta$-CD in 8 ml of 12% weight aqueous NaOH was placed under dry nitrogen atmosphere in a 25 ml glass vial. 8.0 g (27.8 mol) of XPG were added drop by drop by continuous mixing and the solution maintained at r.t. for 1 hr, at 60C for 1,5 hrs and at r.t. for additional 36 hrs. The pH was adjusted to 7-8 by adding diluted HCl and the half-solid residue washed with ethilic ether. The white solid residue was dissolved with chloroform and then dried under vacuum to yield 3.9 g of polymeric product that was characterized by IR and NMR analysis. An average of substitution of 0.7 mol XPG/ mol of glucosidic residues was determined by 1H-NMR analysis.
IR (film): $\bar{\nu}$ = 3600-3100 ($\nu$ O-H), 3000-2800 ($\nu$ CH aliphatic), 1464 ($\delta$ $CH_2$ e $\delta_{as}$ $CH_3$), 1378 ($\delta_s$ $CH_3$), 1300-1000 $cm^{-1}$ ($\nu$ C-O-C e $\nu$ C-O)e 800-400 $cm^{-1}$ ($\delta$ O-H).
$^1$H-NMR (DMSO-$d_6$): $\delta$ = 1,2-1,3 (m, $CH_3$), 3,1-5,2 (m, CH-O + $CH_2$-O + OH) e 5,7 ppm (s, O-CH-O).
$^{13}$C-NMR (DMSO-$d_6$): $\delta$ = 25,5-27,5 ($CH_3$), 60-82 (CH-O + $CH_2$-O), 99-103 (O-C-O $\beta$CD) e 108-109 ppm (O-CO XPG).

Example 8 Reaction of L-0-glycidyl-di-O-isopropyli denearabitol with $\beta$-cyclodextrin

A solution of 5.9 g (36.4 mmol) of glucosidic residues) of $\beta$-CD in 17 ml of 12% weight aqueous NaOH was placed under dry nitrogen atmosphere in a 50 ml glass vial. 15.0 g (52 mol) of APG were added drop by drop by continuous mixing and the solution maintained at r.t. for 1 hr, at 60C for 1,5 hrs and at r.t. for additional 36 hrs. The pH was adjusted to 7-8 by adding diluted HCl and the half-solid residue washed with ethilic ether. The white solid residue was dissolved with chloroform and then dried under vacuum to yield 8.8 g of polymeric product that was characterized by IR and NMR analysis. An average of substitution of 0.5 mol APG/ mol of glucosidic residues was determined by 1H-NMR analysis.
IR (film): $\bar{\nu}$ = 3600-3100 ($\nu$ O-H), 3000-2800 ($\nu$ CH aliphatic ), 1464 ($\delta$ $CH_2$ e $\delta_{as}$ $CH_3$), 1378 ($\delta_s$ $CH_3$), 1300-1000 ($\nu$ C-O-C e $\nu$ C-O) e 800-400 $cm^{-1}$($\delta$ O-H).
$^1$H-NMR (DMSO-$d_6$): $\delta$ = 1,2-1,3 (m, $CH_3$), 3,1-5,2 (m, CH-O + $CH_2$-O + OH) e 5,7 ppm (s,O-CH-O).
$^{13}$C-NMR (DMSO-$d_6$): $\delta$ = 25,5-27,5 ($CH_3$), 60-82 (CH-O + $CH_2$-O), 99-103 (O-C-O $\beta$CD) e 108-109 ppm (O-C-O APG).

Example 9 Reaction of N-glycidylpyrrolidone with $\beta$-cyclodextrin

A solution of 7.3 g (44.8 mmol) of glucosidic residues) of $\beta$-CD in 20 ml of 12% weight aqueous NaOH was placed under dry nitrogen atmosphere in a 50 ml glass vial. 8.1 g (63.9 mol) of NPG were added drop by drop by continuous mixing and the solution maintained at r.t. for 1 hr, at 60C for 1,5 hrs and at r.t. for additional 12 hrs. The pH was adjusted to 7-8 by adding diluted HCl and the half-solid residue washed with chloroform. The white solid residue was dissolved with methanol and then dried under vacuum to yield 10.6 g of polymeric product that was characterized by IR and NMR analysis. An average of substitution of 0.8 mol NPG/ mol of glucosidic residues was determined by 1H-NMR analysis.
IR (film): $\bar{\nu}$ = 3600-3100 ($\nu$ O-H), 3000-2800 ($\nu$ CH aliphatic), 1654 ($\nu$ C=O), 1466 ($\delta$ $CH_2$), 1300-1000 ($\nu$ C-O-C, $\nu$ C-N e $\nu$ C-O) e 800-400 $cm^{-1}$ ($\delta$ O-H).
$^1$H-NMR (DMSO-$d_6$): $\delta$ = 1,9 (m, $CH_2$), 2,2(m, $CH_2$-CO), 3,0-5,2 (m, $CH_2$-N + $CH_2$-O + CH-O + OH) e 5,8 ppm (s, O-CH-O).
$^{13}$C-NMR (DMSO-$d_6$): $\delta$ = 17,70(C-5 NGP), 30,45 (C-6 NGP), 45,76 (C-4 NGP), 48,15 (C-3 NGP), 64,04 (C-2 NGP), 69,79 (C-1 NGP), 60-82 (CH-O + $CH_2$-O $\beta$CD), 99-103 (O-C-O $\beta$CD) e 174-177 ppm (C-7 NGP).

Reaction of deprotection

The deprotection reaction was performed by heating of methanol or methanol/water solutions of the obtained compounds in the presence of either mineral acids (HCl, H2SO4) or preferably a sulphonic resin of styrene/divinylbenzene (Amberlyst 15, acid form, exchange power 4.6 meq/g).

Example 10 $\beta$-Cyclodextrin grafted with 1-0-glycidylglycerol

A solution of 3.0 g of GIG grafted $\beta$-CD in 250 ml of methanol was placed under dry nitrogen in a 500 ml two necked flask equipped with condenser and magnetic stirring. After addition of 0.8 g of Amberlyst 15, the mixture was kept under stirring at 45C for 24 h, then the resin was filtered off and the volatile products removed under vacuum to yield 1.9 g of a white powder product that was characterized by IR and NMR

analysis. The 1HNMR spectrum resulted to be in agreement with the total removal of the isopropylidenic groups.
IR (film): $\bar{\nu}$ = 3600-3100 ($\nu$ O-H), 3000-2800 ($\nu$ CH aliphatic ), 1464 ($\delta$ $CH_2$ e $\delta_{as}$ $CH_3$), 1378 ($\delta_s$ $CH_3$), 1300-1000 ($\nu$ C-O-C e $\nu$ C-O) e 800-400 $cm^{-1}$ ($\delta$ O-H)
$^{13}C$-NMR (DMSO-$d_6$): $\delta$ = 60-83 (CH-O + $CH_2$-O) e 100-104 ppm (O-C-O $\beta$CD).

Example 11 $\beta$-Cyclodextrin grafted with 1-0-glycidylxylitol

A solution of 2.0 g of XPG grafted $\beta$-CD in 250 ml of methanol was placed under dry nitrogen in a 500 ml two necked Flask equipped with condenser and magnetic stirring. After addition of 0.5 g of Amberlyst 15, the mixture was kept under stirring at 45C for 39 h, then the resin was filtered off and the volatile products removed under vacuum to yield 1.2 g of a white powder product that was characterized by IR and NMR analysis. The 1HNMR spectrum resulted to be in agreement with the total removal of the isopropylidenic groups.
IR (film): $\bar{\nu}$ = 3600-3100 ($\nu$ O-H), 3000-2800 ($\nu$ CH aliphatic ), 1464 ($\delta$ $CH_2$ e $\delta_{as}$ $CH_3$), 1378 ($\delta_s$ $CH_3$), 1300-1000 ($\nu$ C-O-C e $\nu$ C-O) e 800-400 $cm^{-1}$ ($\delta$ O-H).
$^{13}C$-NMR (DMSO-$d_6$): $\delta$ = 25,5-27,5 ($CH_3$), 60-82 (CH-O + $CH_2$-O) e 99-103 ppm (O-C-O $\beta$CD).

Example 12 $\beta$-Cyclodextrin grafted with L-0-glycidylarabitol

A solution of 2.5 g of APG grafter $\beta$-CD in 180 ml of methanol was placed under dry nitrogen in a 500 ml two necked flask equipped with condenser and magnetic stirring. After addition of 2.5 g of Amberlyst 15, the mixture was kept under stirring at 45C for 68 h, then the resin was filtered off and the volatile products removed under vacuum to yield 1.6 g of a white powder product that was characterized by IR and NMR analysis. The 1HNMR spectrum resulted to be in agreement with the total removal of the isopropylidenic groups.
IR (film): $\bar{\nu}$ = 3600-3100 ($\nu$ O-H), 3000-2800 ($\nu$ CH aliphatic), 1464 ($\delta$ $CH_2$ e $\delta_{as}$ $CH_3$), 1378 ($\delta_s$ $CH_3$), 1300-1000 ($\nu$ C-O-C e $\nu$ C-O) e 800-400 $cm^{-1}$ ($\delta$ O-H).
$^{13}C$-NMR (DMSO-$d_6$): $\delta$ = 25,5-27,5 ($CH_3$), 60-82 (CH-O + $CH_2$-O), 99-103 (O-C-O $\beta$CD) e 108-109 ppm (O-C-O APG).

**Claims**

**1.** Cyclodextrin derivatives grafted with protected polyhydroxylated substituents, with a marked hydrophilic character, chemically tuneable by partial removal of the hydrophobic isopropylidene protecting groups present in the glycidyl residues grafted on the glucose units, having the following formula:

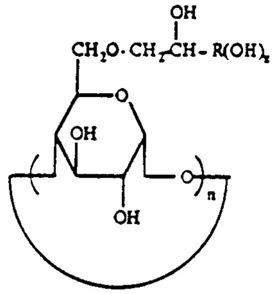

where
R is comprised in the following group:
- either 1-(2-pyrrolidonyl)alkoxymethyl or 1-(2-pyrrolidonyl)alkyl and then x = 0;
- glyceryl and then x = 2;
- pentitolyl and then x = 4;
- heptitolyl and then x = 6;

n = either 6, or 7, or 8.

**2.** Cyclodextrin derivatives having the formula of claim 1 characterized in that they derive by grafting with the glycidyl ethers of alditols protected with isopropylidene groups and by controlled removal of said isopropylidene groups.

**3.** Cyclodextrin derivatives according to Claim 2 in which said glycidyl ethers of alditols have an odd number of carbon atoms number, larger than 3.

**4.** Cyclodextrin derivatives according to Claim 3 in which said odd number of carbon atoms number is either 5 or 7.

**5.** Cyclodextrin derivatives according to any of the previous Claims in which said glycidyl ethers of alditols are chosen in the following groups:
1-0-glycidyl-2,3-0-isopropylideneglycerol,
0-glycidyl-di-0-isopropylidenexylitol,
1-0-glycidyl-di-0-isopropylidenearabitol,
N-glycidylpyrrolidone.

**6.** Cyclodextrin derivatives according to any of the previous Claims in which said removal of isopropylidene groups is carried out by by heating at a temperature between 40C and 50C the compound solution in methanol or methanol/water mixtures in the 25 presence of either mineral acids or a styrene/divinylbenzene sulphonic resin for a time comprised between 20 and 80 hrs.

**7.** Process for the production of cyclodextrin derivatives having the following formula

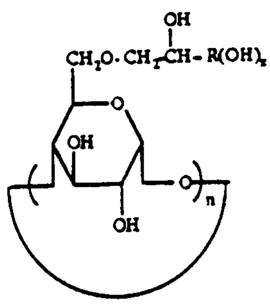

where
R is comprised in the following group:
- either 1-(2-pyrrolidonyl)alkoxymethyl or 1-(2-pyrrolidonyl)alkyl and then $x=0$;
- glyceryl and then $x=2$;
- pentitolyl and then $x=4$;
- heptitolyl and then $x=6$;

n = either 6, or 7, or 8.
characterized by grafting of glycidyl ethers of alditols protected with isopropylidene groups and their mixtures with cyclodextrin molecules and and by controlled removal of said isopropylidene groups.

**8.** Process for the production of cyclodextrin derivatives according to Claim 7 in which said glycidyl ethers of alditols have an odd number of carbon atoms number, larger than 3.

**9.** Process for the production of cyclodextrin derivatives according to Claim 8 in which said odd number of carbon atoms number is either 5 or 7.

**10.** Process for the production of cyclodextrin derivatives according to Claim 9 in which said glycidyl ethers of alditols are chosen in the following groups:
1-0-glycidyl-2,3-0-isopropylideneglycerol,
0-glycidyl-di-0-isopropylidenexylitol,
1-0-glycidyl-di-0-isopropylidenearabitol,
N-glycidylpyrrolidone.

**11.** Process for the production of cyclodextrin derivatives according to any of Claims from 7 to 10 in which said removal of isopropylidene groups is carried out by by heating at a temperature between 40C and 50C the compound solution in methanol or methanol/water mixtures in the presence of either mineral acids or a styrene/divinylbenzene sulphonic resin for a time comprised between 20 and 80 hrs.